# EUROPEAN PATENT APPLICATION

(11) **EP 4 362 197 A1**
(43) Date of publication of application: **01.05.2024**
(21) Application number: 23831752.3
(22) Date of filing: 05.06.2023
(51) Int. Cl.: H01M 50/358, H01M 50/375, H01M 50/22, H01M 50/258, H01M 50/211

(54) **BATTERY PACK**

(30) Priority: 27.06.2022 KR 20220078213; 01.06.2023 KR 20230070826
(71) Applicant: LG Energy Solution, Ltd., Seoul 07335 (KR)
(72) Inventor: JANG, Byung Do, Daejeon 34122 (KR); LEE, Jae Hyun, Daejeon 34122 (KR); KIM, Dae Gil, Daejeon 34122 (KR); LEE, Hyoung Suk, Daejeon 34122 (KR)
(74) Representative: Plasseraud IP
(86) International application number: PCT/KR2023/007693
(87) International publication number: WO 2024/005392

(57) **Abstract**

According to the present invention, gas in a battery pack may be easily discharged to the outside of the battery pack using gas channels disposed in an upper pack housing and a sidewall frame of a lower pack housing. Accordingly, it is possible to delay the spread of high-temperature gases or flames between battery cells accommodated in the battery pack. In addition, provided is a battery pack in which a gasket is introduced, thereby preventing gases and flames from spreading between battery assemblies, and a lower pack housing includes a unit frame assembly including unit frames, which allows a bottom area of the battery pack to be freely expanded.

## Description

### [Technical Field]

The present invention relates to a battery pack accommodating a plurality of battery assemblies.

More specifically, the present invention relates to a battery pack capable of efficiently discharging venting gas generated in a battery pack to the outside of the battery pack.

This application claims the benefit of priority based on Korean Patent Application No. 10-2022-0078213, filed on June 27, 2022, and Korean Patent Application No. 10-2023-0070826, filed on June 01, 2023, and the entire contents of the Korean patent applications are incorporated herein by reference.

### [Background Art]

Battery packs applied to electric vehicles or the like have a structure in which a plurality of battery modules including a plurality of secondary batteries are connected in series or parallel to obtain high output power. The secondary battery may include positive and negative electrode current collectors, a separator, an active material, an electrolyte, and the like and may be repeatedly charged or discharged through electrochemical reactions between the components.

Recently, as battery capacity has increased, battery cells accommodated in a battery pack have become larger or the number of battery cells accommodated therein has increased. As battery capacity increases, the explosive power of battery packs also increases, and thus the risk of explosion is also increasing. For example, when one battery cell ignites and generates high-temperature gases or flames, the spread of the high-temperature gases or flames to adjacent battery cells is accelerated, and thus there is a need for a structure capable of delaying or preventing this spread.

Meanwhile, when the type or size of battery cells changes or when a capacity of a battery pack needs to be changed through an increase or decrease in the number of battery cells, the size or specification of the battery pack that accommodates the battery cell should be changed. In conventional battery packs, since the standard of a base plate accommodating a battery cell or module is set, the size or area of the battery pack cannot be freely changed. In particular, when various types of battery packs with new specifications and capacities need to be manufactured according to the types of newly released vehicles, it has been difficult to respond to the types of newly released vehicles. That is, conventional battery packs have a problem that the degree of freedom in design change is significantly reduced.

Therefore, there is a need to develop a technology capable of delaying or preventing the spread of gases and flames in a battery pack.

In addition, there is a need to develop a technology in which, while a size or area is freely changed according to the types of battery cells or vehicles in which the cells are used, energy density may be improved by simplifying a structure.

### [Related Art Documents]

### [Patent Documents]

Korean Patent Publication No. 10-2022-0014027

### [Disclosure]

### [Technical Problem]

An object of the present invention is to provide a battery pack in which high-temperature gas generated in the battery pack is efficiently discharged, thereby delaying the spread of high-temperature gases or flames between battery assemblies

### [Technical Solution]

A battery pack according to one embodiment of the present invention includes a plurality of battery assemblies, a lower pack housing that has an open upper surface and accommodates the plurality of battery assemblies, and an upper pack housing coupled to the open upper surface of the lower pack housing, wherein the upper pack housing includes a gas inlet through which gas generated in the battery pack is introduced and a first gas channel communicating with the gas inlet, and the lower pack housing includes a sidewall frame that includes a second gas channel communicating with the first gas channel and a gas outlet communicating with the second gas channel to discharge the gas to an outside of the battery pack.

An edge of the upper pack housing may be coupled on the sidewall frame of the lower pack housing, a first venting hole communicating with the first gas channel may be disposed in a lower portion of the edge, and a second venting hole, which communicates with the first venting hole and the second gas channel, may be disposed in an upper portion of the sidewall frame.

The upper pack housing may include a lower plate frame in which the gas inlet is disposed, and an upper plate frame coupled on the lower plate frame to form the first gas channel between the upper plate frame and the lower plate frame.

The upper pack housing may have a hollow structure having the first gas channel disposed therein, and a plurality of gas inlets communicating with the first gas channel may be disposed in a lower surface of the upper pack housing.

The sidewall frame may have a hollow structure in which the second gas channel is disposed, and the gas outlet may be disposed as at least one gas outlet along an outer wall of the sidewall frame.

The first gas channel and the second gas channel may be oriented in different directions.

A venting mechanism part including a gas seal member, which is deformed at a predetermined pressure and/or temperature or higher to open the gas outlet to the outside, may be installed at the gas outlet of the sidewall frame.

The upper pack housing and the sidewall frame may be made of different materials, and the material of the upper pack housing may have higher thermal resistance than the material of the sidewall frame.

A plurality of partition walls each disposed between adjacent battery assemblies may be installed on a bottom portion of the lower pack housing, and the sidewall frame may be coupled along a perimeter of the bottom portion.

A height of the partition wall may be greater than or equal to a height of the battery assembly.

A distance between adjacent partition walls may be less than a width of each of the battery assemblies.

The battery assemblies may be arranged in two or more columns between adjacent partition walls in an extending direction of the partition wall, two or more partition walls may be installed to be spaced a predetermined interval apart from each other in an arrangement direction of the battery assemblies to correspond to the number of columns of the battery assembly, and the battery pack may further include a center frame which extends in a direction perpendicular to the arrangement direction of the battery assemblies and is installed in the predetermined interval between the partition walls.

The battery pack may further include a gasket coupled on an upper surface of the sidewall frame of the lower pack housing and the partition wall to isolate each battery assembly accommodated in the lower pack housing together with the partition wall.

The gas inlet may be disposed in each portion of a lower surface of the upper pack housing which is positioned above each isolated battery assembly.

The pack housing may include a unit frame assembly which is an assembly of a plurality of unit frames each including the partition wall and a base plate extending in one direction from a lower end portion of the partition wall, wherein an end portion of the base plate at the lower end portion of the partition wall in one unit frame is coupled to an end portion of the base plate extending in the one direction in a subsequent unit frame to sequentially couple the unit frames in a line in a lateral direction and form the unit frame assembly, and the sidewall frame coupled along a perimeter of the unit frame assembly.

### [Advantageous Effects]

According to the present invention, since high-temperature gas generated in a battery pack can be discharged through an upper pack housing toward a sidewall frame, it is possible to effectively delay the spread of high-temperature gases or flames between battery cells.

In addition, according to embodiments of the present invention, by implementing a cell-to-pack structure that directly accommodates battery cells without a module housing, processes and costs associated with production and assembly of module parts can be eliminated. Also, since an assembly tolerance required for module installation can be eliminated, a space within a pack in a height direction can be made more compact, and the weight of a battery pack can be reduced, an energy density occupying the same battery pack space can be further improved.

In addition, according to embodiments of the present invention, the assembly number of unit frames usable as common parts is increased or decreased, thereby allowing the size and area of a battery pack to be freely changed. Therefore, the size of the battery pack can be changed according to the required specifications, thereby greatly improving the degree of freedom in design of the battery pack. In addition, production costs of parts can be reduced by converting a unit frame into a standard part or a common part.

### [Brief Description of the Drawings]

FIG. 1 is a schematic view illustrating a structure of a typical battery module.
FIG. 2 is a schematic view of a conventional battery pack.
FIG. 3 is a schematic cross-sectional view of a structure of the conventional battery pack.
FIG. 4 is a partially exploded perspective view of a battery pack according to one embodiment of the present invention.
FIG. 5 is a schematic view of a battery assembly accommodated in the battery pack of the present invention.
FIG. 6 is an exploded view of a pack housing of the battery pack of FIG. 4.
FIG. 7 is a perspective view illustrating a gas venting path in the battery pack of FIG. 4.
FIG. 8 is a cross-sectional view illustrating a gas venting path in the battery pack of FIG. 4.
FIG. 9 is a schematic view illustrating a comparison between the conventional battery pack and the battery pack of the present invention.
FIG. 10 is a partially exploded perspective view of a battery pack according to another embodiment of the present invention.
FIG. 11 is a perspective view of a battery assembly of FIG. 10 according to the present invention.
FIG. 12 is a cross-sectional view illustrating a gas venting path in the battery pack of FIG. 10.
FIG. 13 is a partially exploded perspective view illustrating a battery pack according to still another embodiment of the present invention.
FIG. 14 is an exploded view of a pack housing of the battery pack of FIG. 13.
FIG. 15 is a schematic view illustrating a process of coupling a unit frame assembly which is a component of the battery pack of FIG. 13.
FIG. 16 is a cross-sectional view illustrating a gas venting path in the battery pack of FIG. 13.

### [Description of reference numerals]

10: battery module
100: cell stack unit
110: battery cell
120: busbar assembly
121: busbar
122: terminal busbar
130: buffer pad
200, 200': lower pack housing
210: partition wall
220: base plate
230: sidewall frame
231: front frame
231a: second venting hole
232: rear frame
232a: second venting hole
233: first side frame
234: second side frame
V1, V2: venting mechanism part
250: center frame
210': partition wall
220': base plate
T: unit frame
A: unit frame assembly
300: upper pack housing
310: upper plate frame
320: lower plate frame
320a: first venting hole
321: gas inlet
H1: first gas channel
H2: second gas channel
400: gasket
410: outer frame
411: through-passage
420: isolation frame
1000, 2000, 3000: battery pack

### [Detailed Description of the Preferred Embodiments]

The present invention will become more apparent by describing in detail the embodiments of the present invention with reference to the accompanying drawings. It should be understood that the embodiments disclosed herein are illustrative only for better understanding of the present invention, and that the present invention may be modified in various ways. In addition, for ease understanding of the present invention, the accompanying drawings are not drawn to actual scale, but the dimensions of some components may be exaggerated.

Hereinafter, the present invention will be described in detail.

### (First Embodiment)

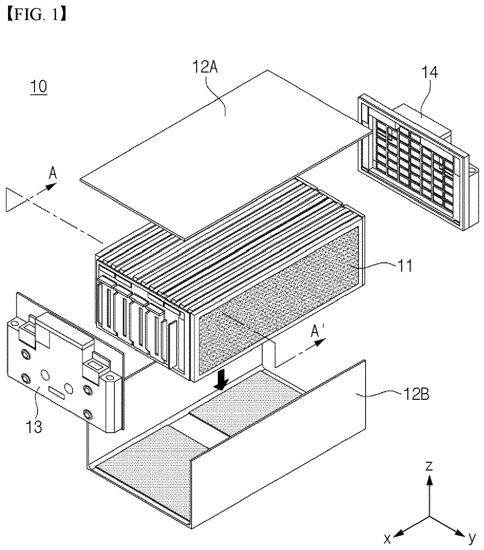

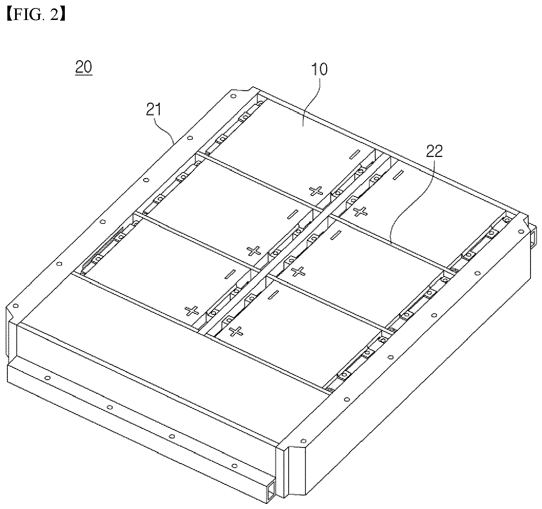

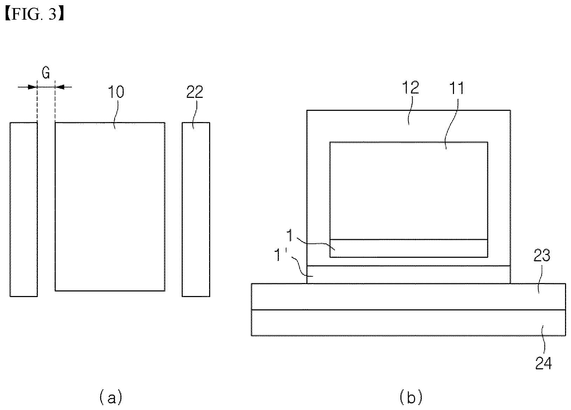

FIG. 1 is a schematic view illustrating a structure of a typical battery module. FIG. 2 is a schematic view of a conventional battery pack. FIG. 3 is a schematic cross-sectional view of a structure of the conventional battery pack.

As shown in FIG. 1, a typical battery module 10 include a module housing 12 (12A and 12B), which accommodates a plurality of battery cells 11, and a front end plate 13 and a rear end plate 14 that cover front and rear ends of the module housing. In addition, a heat transfer member 1 made of a thermal conductive adhesive or the like is positioned between the battery cell and the module housing (see FIG. 3).

In FIGS. 2 and 3, a plurality of battery modules 10 are illustrated as being installed in a pack housing 21 of a battery pack 20. Each battery module 10 is installed between partition walls 22 provided on a base plate 23 of the pack housing 21. In addition, a heat transfer member 1' made of a thermal conductive adhesive or the like is additionally disposed between the battery module and the base plate 23 on which the module is mounted. A cooling plate 24 is disposed below the base plate 23.

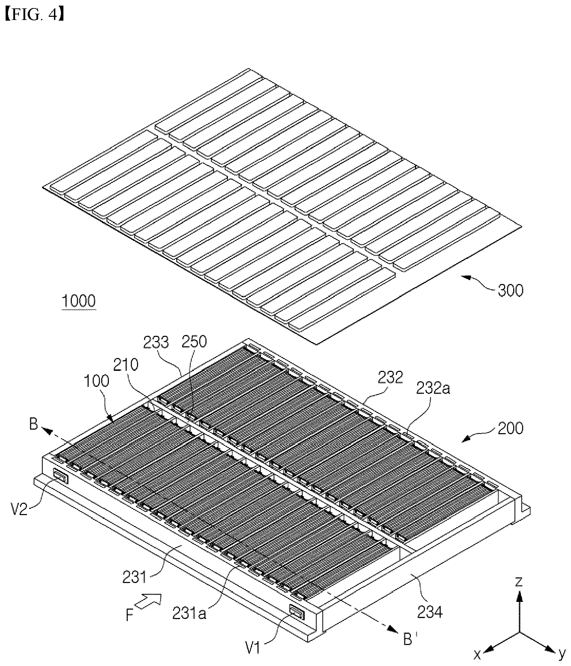

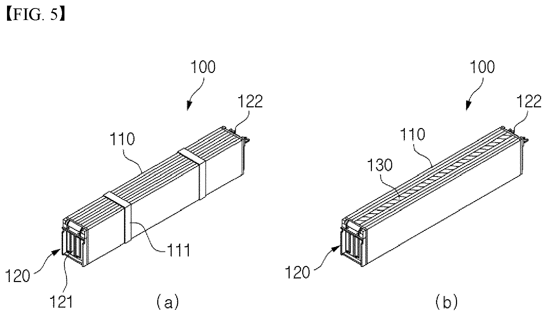

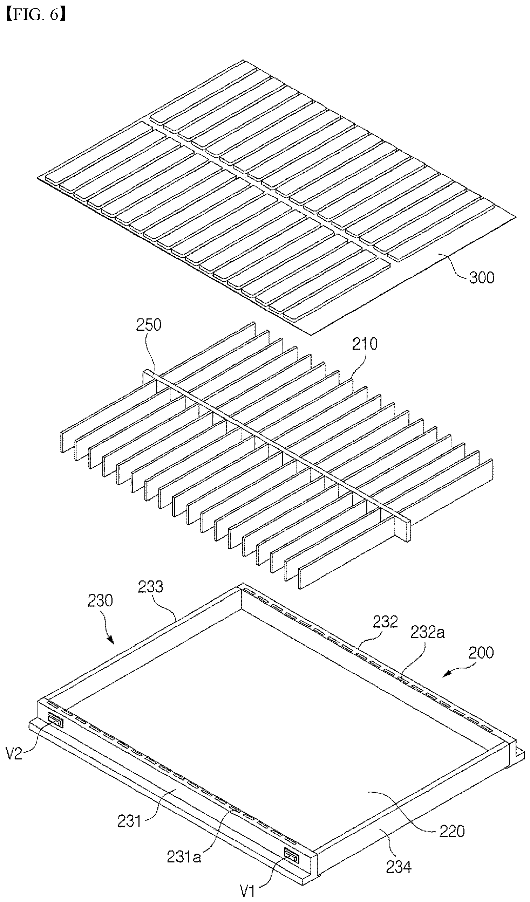

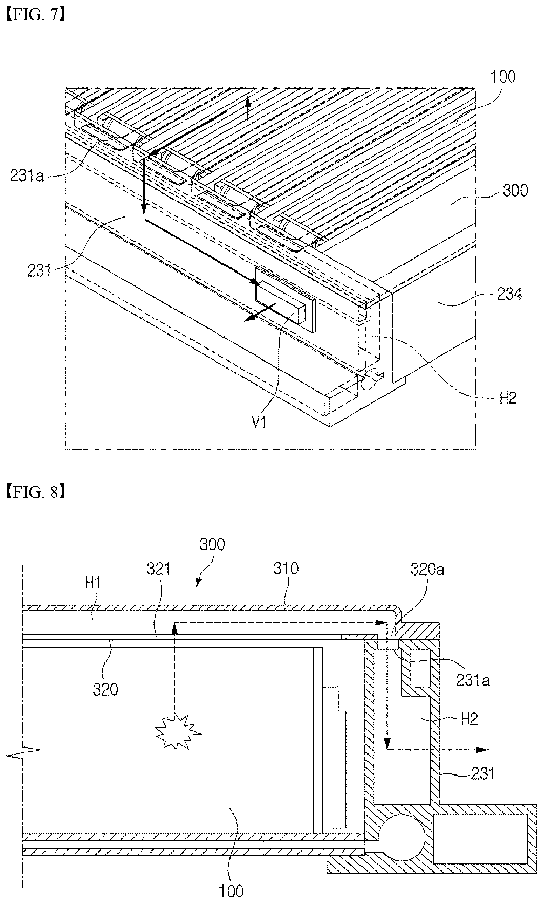

FIG. 4 is a partially exploded perspective view of a battery pack according to one embodiment of the present invention. FIG. 5 shows schematic views of a battery assembly accommodated in the battery pack of the present invention. FIG. 6 is an exploded view of a pack housing of the battery pack of FIG. 4. FIGS. 7 and 8 are a perspective view and a cross-sectional view illustrating a gas venting path according to the battery pack of FIG. 4.

Terms indicating directions such as forward, rearward, leftward, rightward, upward, downward directions used herein may be changed according to a position of an observer or the arrangement form of an object. On the other hand, for convenience of description, in the present specification, directions are classified into forward, rearward, leftward, rightward, upward, downward directions based on a view from a direction indicated by an arrow F of FIG. 4. That is, a front-rear direction is defined as an X direction, a left-right direction is defined as a Y direction, and a height direction is defined as a Z direction.

The battery pack according to one embodiment of the present invention includes a plurality of battery assemblies, a lower pack housing that has an open upper surface and accommodates the plurality of battery assemblies, and an upper pack housing coupled to an open upper surface of the lower pack housing, wherein the upper pack housing includes a gas inlet through which gas generated in the battery pack is introduced and a first gas channel communicating with the gas inlet, and the lower pack housing includes a sidewall frame including a second gas channel communicating with the first gas channel and a gas outlet communicating with the second gas channel to discharge the gas to the outside of the battery pack.

The battery pack according to one embodiment of the present invention may include the plurality of battery assemblies, the lower pack housing, and the upper pack housing.

The battery assembly may include a plurality of battery cells. The battery cells may be classified into pouch-type battery cells and can-type battery cells according to the shape of a case. The can-type battery cells may include cylindrical battery cells and prismatic battery cells. In addition, each of the battery cells includes an electrode assembly embedded in a battery case. The electrode assembly includes a positive electrode, a negative electrode, and a separator interposed between the positive electrode and the negative electrode. The electrode assembly may be classified into a jelly-roll type electrode assembly and a stack-type electrode assembly according to an assembly form. The jelly-roll type electrode assembly is formed by winding a positive electrode, a negative electrode, and a separator interposed therebetween. The stack-type electrode assembly is formed by sequentially stacking a positive electrode, a separator, and a negative electrode.

The battery assembly may be a battery module 10 including a module housing that accommodates the plurality of battery cells as shown in FIG. 1. The battery module may have a form in which a portion of the module housing accommodating the battery cells is removed. For example, a battery module, which includes a module housing in which an upper housing 12A is removed or a bottom of a lower housing 12B is removed to simplify a structure, may be the battery assembly of the present invention.

Alternatively, as shown in FIGS. 4 and 5, a battery cell stack in which a module housing itself surrounding upper, lower, left, and right surfaces of a plurality of battery cells is removed may also be the battery assembly.

In the embodiment shown in FIGS. 4 and 5, the battery cell stack in which a plurality of battery cells 110 are stacked, that is, a cell stack unit 100, is applied as the battery assembly. The cell stack unit 100 may be formed by stacking the plurality of battery cells 110. The battery cells 110 may be stacked such that side surfaces thereof are in contact with each other, and side surfaces of adjacent battery cells 110 may be fixed to each other through a double-sided tape. Alternatively, the plurality of stacked battery cells 110 may be wrapped, for example, with a band 111 made of a synthetic resin to form one battery assembly. In the present embodiment, as shown in FIG. 4, the cell stack units 100 may be provided to be stacked in the left-right direction (or horizontal direction). However, if necessary, it is also possible to configure the battery cells 110 to be stacked in a vertical direction (height direction).

Busbar assemblies 120 may be coupled to electrode leads at front and rear end portions of the cell stack unit 100. The busbar assembly 120 may include a busbar 121 that electrically connects the battery cells or a terminal busbar 122 that may be connected to an external power supply. The number of battery cells 110 stacked in one cell stack unit 100 may be, for example, 2, 4, 6, or 8, but is not limited thereto.

The cell stack unit 100 may include at least one buffer pad 130 between the stacked battery cells 110 (see (b) of FIG. 5). The buffer pad is for absorbing the expansion of the battery cell 110 due to a swelling phenomenon.

In the present embodiment, an example of a case in which a pouch-type battery cell is used as the battery cell 110 has been described, but the present invention is not limited thereto. For example, the battery assembly may be constituted using can-type battery cells.

As shown in FIG. 4, the plurality of battery assemblies (for example, the cell stack units 100) are accommodated in a lower pack housing 200 having an open upper surface.

An upper pack housing 300 is coupled to the open upper surface of the lower pack housing 200. For example, the upper pack housing 300 may be a pack cover assembly in which a pack cover and accompanying parts are coupled. The upper pack housing 300 may be formed in a flat plate shape. However, in order to form a space above the battery assembly, the upper pack housing 300 may have a shape in which a portion corresponding to the battery assembly convexly protrudes, and an inner surface thereof is concavely formed.

The upper pack housing 300 of the present invention includes a gas inlet 321 and a gas channel communicating with the gas inlet 321 in order to discharge gas generated in the battery pack to the outside.

High-temperature gas generated in the battery pack 1000 rises from the battery assemblies and mainly collects in a space between the lower pack housing 200 and the upper pack housing 300. However, sidewall frames constituting the lower pack housing 200 are made of a material with relatively low thermal resistance, such as aluminum, to reduce weight. Therefore, when the high-temperature gas is discharged directly through the sidewall frame, there is a possibility that the sidewall frame may partially soften or melt, and thus the structure of the lower pack housing 200 may be damaged. On the other hand, the upper pack housing 300 is made of a material that is relatively strong and has high thermal resistance, such as steel, to protect the battery pack. Therefore, the upper pack housing 300 generally has higher thermal resistance than the lower pack housing 200. In the present invention, the upper pack housing 300, which has high thermal resistance, is provided with the gas channel for discharging high-temperature gas. In addition, when the gas channel is disposed in the upper pack housing, gas collected in the space between the upper pack housing 300 and the lower pack housing 200 can directly flow into the upper pack housing 300. That is, since high-temperature gas quickly flows into the upper pack housing 300 without remaining in the battery pack for a long time, it is possible to delay the spread of heat to other battery cells or battery assemblies and slow the rise in temperature within the battery pack. In addition, since high-temperature gas has a strong tendency to rise, considering the flow tendency of gas, there is an advantage to first venting gas through the gas channel of the upper pack housing 300 rather than venting the gas through the lower pack housing 200.

The gas introduced into the gas inlet 321 of the upper pack housing 300 moves to the lower pack housing 200 through the gas channel and is discharged to the outside through a gas channel provided in the lower pack housing 200. In terms of gas flow, the gas channel of the upper pack housing 300 will be referred to as a first gas channel H1, and a gas channel of the sidewall frame will be referred to as a second gas channel H2.

Referring to FIG. 8, a plurality of gas inlets 321 are disposed in a lower surface of the upper pack housing 300. In order to quickly discharge the gas collected above the battery assembly, at least one gas inlet 321, preferably, one gas inlet 321 for each battery assembly, may be disposed. In addition, when a position of the gas inlet 321 is also provided at a position corresponding to a position of the battery assembly accommodated in the lower pack housing 200, gas generated in each battery assembly can be easily vented. In particular, since a large amount of high-temperature gas is generated in an electrode lead of the battery cell 110, the gas inlet 321 may be disposed above a position corresponding to the electrode lead of the battery cell 110 included in the battery assembly.

In addition, a size or shape of the gas inlet 321 may be appropriately determined in consideration of the ease of gas discharge. For example, the shape of the gas inlet 321 may be disposed in a long hole shape extending in an extending direction of the battery assembly. In addition, the size of the gas inlet 321 may be large enough to correspond to an upper area of the battery assembly. However, the number, position, shape, and size of the gas inlets 321 are not limited to those described above. For faster and easier gas venting, for example, appropriate modifications may be made such as distributing small gas inlets 321 uniformly in the lower surface of the upper pack housing 300 or forming just a few long gas inlets across the battery pack.

For example, the upper pack housing 300 may be manufactured as a hollow structure with the first gas channel H1 disposed therein. In this case, the gas inlet 321 disposed in the lower surface may communicate with the hollow first gas channel H1.

An example of the upper pack housing 300 is shown in FIG. 8. Referring to FIG. 8, the upper pack housing 300 includes a lower plate frame 320 in which the gas inlet 321 is disposed, and an upper plate frame 310 coupled on a lower plate frame to form the first gas channel H1 between the upper plate frame 310 and the lower plate frame. Side plate frames may be provided between the upper plate frame 310 and the lower plate frame 320. Alternatively, parts corresponding to two side plates may be formed to extend downward from both sides of the upper plate frame or may also be formed to extend upward from both sides of the lower plate frame.

Since the first gas channel H1 of the upper pack housing 300 communicates with the second gas channel H2 of the lower pack housing 200, a venting hole (first venting hole 320a) that communicates with each of the first gas channel and the second gas channel H2 may be disposed in the lower surface of the upper pack housing 300. The upper pack housing 300 is coupled to cover the open upper surface of the lower pack housing 200, that is, an upper surface of an edge of the lower pack housing 200 (upper surfaces of sidewall frames 230). Accordingly, the first venting hole 320a is also disposed in a lower surface of an edge of the upper pack housing 300 corresponding to the upper surface of the sidewall frame 230.

The arrangement direction of the first gas channel H1 and the positions and number of first venting holes 320a are determined according to the position and number of second gas channel H2 and second venting holes 231a and 232a, which will be described below.

That is, the first gas channel H1 extends toward the sidewall frame in which the second gas channel H2 is disposed among the sidewall frames 230 on all four sides surrounding the battery assembly, and the first venting hole 320a may also be disposed in the lower surface of the upper pack housing 300 in contact with the upper surface of the sidewall frame 230 in which the second gas channel H2 is disposed. When the second gas channels H2 are disposed in the sidewall frames on all four sides, there is no particular limitation on the orientation of the first gas channel H1. In addition, the first venting hole 320a may be disposed at any position of the lower surface of the edge of the upper pack housing 300 in contact with the sidewall frames 230 on all four sides. In consideration of the efficiency of gas venting, the first venting holes 320a communicating with the second gas channel H2 may be disposed symmetrically on both sides of a lower surface of the lower pack housing 200 that communicates with the first gas channel H1. Accordingly, gas may move to both sides along the first gas channel H1 of the upper pack housing 300 and may be simultaneously discharged through the second gas channels H2 of the sidewall frames at both sides that communicate with the first gas channel H1.

Referring to FIG. 6, the lower pack housing 200 of the present embodiment includes a base plate 220 that is a bottom portion on which the battery assemblies (for example, battery modules 10 or cell stack units 100) are mounted, and the sidewall frames 230 installed along an edge of the base plate 220 and is disposed as a whole into a box shape with an open upper surface.

Specifically, the sidewall frames 230 may include a front frame 231 and a rear frame 232, which cover front and rear sides of the battery assembly, and a first side frame 233 and a second side frame 234, which cover left and right sides of the battery assembly.

The base plate 220 may have a plate shape extending in the horizontal direction. Here, the horizontal direction refers to a planar direction of a flat ground surface. The base plate 220 may be made of a metal material with high mechanical rigidity.

In addition, the front frame 231, the rear frame 232, and the first and second side frames 233 and 234 are each coupled to the base plate 220. The coupling method may be, for example, a friction stir welding method.

The front frame 231 is elongated in the left-right direction and may have an erect shape in the height direction. The front frame 231 may include a front cover extending in the height direction, and a front plate protruding forward from a lower portion of the front cover. The front plate may be fixedly coupled to a structure such as a vehicle.

The rear frame 232 is elongated in the left-right direction and may have an erect shape in the height direction. The rear frame 232 may have a shape that is the same as or different from that of the front frame 231. The rear frame 232 includes a rear cover extending in the height direction, and a rear plate protruding rearward from a lower portion of the rear cover to have the same shape as the front frame. The rear plate may be fixedly coupled to a structure such as a vehicle.

The first and second side frames 233 and 234 may have an elongated shape in the front-rear direction. The side frames include the first side frame 233 that covers the left side of the battery assembly and a second side frame 234 that covers the right side of the battery assembly. In the illustrated embodiment, the first and second side frames are formed in the form of a flat plate. However, like the front and rear frames 231 and 232, the side frames may be provided as two parts including a flat plate (side cover) extending in the height direction and a flat plate (left plate or right plate) protruding in the left or right direction.

A metal material such as aluminum may be extruded to form internal empty spaces therein, thereby manufacturing the base plate 220 and/or the sidewall frames 230 as hollow frames. In this way, the frames are formed as a hollow type, thereby reducing the weight of the battery pack and increasing energy efficiency. In addition, when a rib-shaped reinforcement wall is formed in the internal space, the mechanical rigidity of the frames can be maintained at a reliable level.

As shown in FIGS. 4 and 6, in the present invention, the sidewall frame 230 may be formed as a hollow frame with a gas channel disposed therein. That is, the second gas channel H2 may be disposed inside at least one of the front frame 231, the rear frame 232, and the first and second side frames 233 and 234, which constitute the sidewall frames. As described above, the second gas channel communicates with the first gas channel H1 provided in the upper pack housing 300. Since the second gas channel H2 communicates with the first gas channel H1, the position of the second gas channel H2 may also be determined according to the position of the first gas channel H1. For example, when the first gas channel H1 extends in the front-rear direction and the first venting holes 320a are disposed on the lower surface of the edge of the upper pack housing 300 at both ends in the front-rear direction, the second gas channels H2 may be disposed in the front frame 231 and the rear frame 232. In this case, the second venting holes 231a and 232a, which communicate with the first venting holes 320a and the second gas channel H2, are disposed in upper portions of the front frame 231 and the rear frame 232.

When the first gas channel H1 extends in the front-rear direction and the first venting holes 320a are disposed in the lower surface of the edge of the upper pack housing 300 at both ends in the front-rear direction, the second gas channels H2 may be disposed in the front frame 231 and the rear frame 232, which extend in the left-right direction. In this case, the second venting holes 231a and 232a, which communicate with the first venting holes 320a and the second gas channel H2, are disposed in the upper portions of the front frame 231 and the rear frame 232.

In addition, when the first gas channel H1 extends in the left-right direction and the first venting holes 320a are disposed in the lower surface of the edge of the upper pack housing 300 at both ends in the left-right direction, the second gas channels H2 may be disposed in the first side frame 233 and the second side frame 234, which extend in the front-right direction.

In the above case, the second gas channel H2 may also be disposed in the sidewall frame that does not directly communicate with the first gas channel H1 through the first venting hole 320a and the second venting hole 231a. For example, it may be assumed that all of the sidewall frames 230 on all four sides include the second gas channels H2 therein. That is, when the second gas channels H2 provided in the sidewall frames 230 on all four sides communicate with each other in a peripheral direction of the battery pack, gas discharged from the first gas channel H1 may flow through the first and second venting holes to flow into the second gas channel H2 of the sidewall frame which directly communicates with the second venting hole, and then may flow into the second gas channel H2 of the sidewall frame which does not directly communicates with the second venting hole, and thus a gas venting path may be extended. Of course, in this case, predetermined communication passages may be provided at coupling portions of opposite sidewall frames such that the second gas channels H2 of adjacent sidewall frames may communicate with each other.

As described above, when gas is discharged from the first gas channel H1 of the upper pack housing 300 through the second gas channel H2 of the lower pack housing 200, there are the following advantages.

First, high-temperature gas does not head directly to the sidewall frame 230, which has weak thermal resistance, but is first directed to the upper pack housing 300, which has strong thermal resistance, thereby preventing damage to the sidewall frame.

Second, gas can be discharged through a long path along the first gas channel H1 and the second gas channel H2. That is, safety is improved because high-temperature gas is not immediately discharged to the outside of a pack. In addition, in a process in which gas passes through a long venting path along the upper pack housing 300 and the lower pack housing 200, incompletely combusted gas can be completely burned, or the temperature and pressure of the gas can be lowered. In this way, by lengthening a venting path, the unstable state of gas can be stabilized, thereby reducing the risk of accidents due to high-temperature gas.

In order to extend a gas venting path, the first gas channel H1 and the second gas channel H2 may be oriented in different directions. For example, when viewed from above, the first gas channel H1 and the second gas channel H2 may be oriented perpendicular to each other. In this case, for example, when high-temperature gas, which flows in the front-rear direction through the first gas channel H1 extending in the front-rear direction, flows in the left-right direction through the second gas channel H2, which extends in the left-right direction, through the first venting hole and the second venting hole, a gas venting path may become longer.

The sidewall frame 230 is provided with a gas outlet communicating with the second gas channel H2.

At least one gas outlet may be disposed along an outer wall of the sidewall frame 230. In order to lengthen a gas venting path, the position of the gas outlet is also important. That is, when the gas outlet is disposed far from the first and second venting holes, the gas introduced into the second gas channel H2 through the second venting hole 231a may sufficiently flow through the second gas channel H2 and then be discharged through the gas outlet. Additionally, when a plurality of gas outlets are disposed, gas can be more quickly discharged to the outside of the battery pack. For example, as shown in FIG. 4, when the gas outlets are disposed in portions of an outer wall positioned at both sides of the second gas channel H2, gas introduced from the upper pack housing 300 to the sidewall frame 230 can be quickly discharged to the outside through the gas outlets at both sides.

Meanwhile, venting mechanism parts V1 and V2 including a gas sealing member, which is deformed at a predetermined pressure and/or temperature or higher and opens the gas outlet to the outside, may be installed at the gas outlets.

The venting mechanism parts V1 and V2 may be provided with venting caps provided at the gas outlets to prevent gas leakage. In addition, the gas sealing member may be installed in the gas outlet or the venting cap. The gas sealing member may be, for example, a sheet-shaped member that is deformed at a predetermined pressure and/or temperature or higher to open the gas outlet to the outside. For example, the gas sealing member may be a rupturable sheet formed to rupture when the pressure of venting gas becomes a predetermined pressure or higher. Alternatively, the sheet member may melt at a predetermined temperature or higher to open the gas outlet. To this end, the sheet member may be made of a film or foam material that is vulnerable to high temperature.

In FIGS. 7 and 8, a gas discharge path according to the present invention is shown.

Referring to FIG. 7, FIG. 7 illustrates that gas in the battery pack flowing into the first gas channel H1 in the upper pack housing 300 is vented through the venting mechanism part V1 installed at one side of the front frame after passing through the second gas channel H2 disposed in the front frame 231, which is a sidewall frame of the lower pack housing 200. Since the first and second gas channels H1 and H2 are oriented perpendicularly to each other, it can be seen that a venting path is effectively increased within the same battery pack area. In addition, since high-temperature venting gas does not head directly to the sidewall frame 230, the sidewall frame can be protected, and the temperature or pressure of the gas can be lowered during a long gas flow process.

FIG. 8 is a cross-sectional view along line B-B' of FIG. 4 and illustrates a gas venting path in more detail. That is, FIG. 8 illustrates that gas generated in the battery assembly is introduced into the gas inlet 321 of the upper pack housing 300 and flows through the first gas channel H1-first venting hole 320a-second venting hole 231a-second gas channel H2 and is finally discharged through the gas outlet (venting mechanism part V1 or V2).

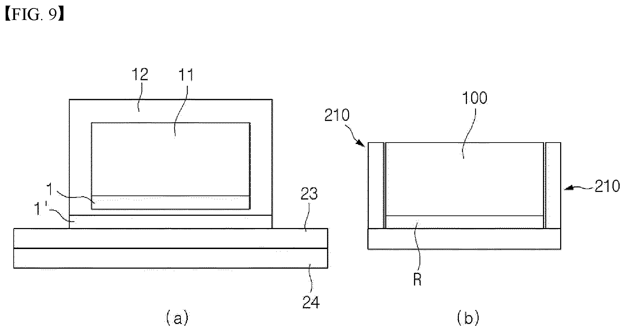

FIG. 9 is a simplified view illustrating a comparison between the conventional battery pack structure and the battery pack structure of the present invention. A heat transfer member R may be provided between the battery assembly 10 or 100 and a bottom surface of the pack housing 200. That is, the heat transfer member R may be provided on the base plate 220 constituting the bottom portion of the lower pack housing 200. In order to smoothly transfer heat, the heat transfer member may include at least some of heat conductive grease, a heat conductive adhesive, a heat conductive epoxy, and a heat dissipation pad, but the present invention is not limited thereto. In addition, since the heat transfer member R serves to fix a lower surface of the battery assembly 10 or 100 to the base plate 220, the heat transfer member R may be provided to have an adhesive strength of a predetermined level or more. Through the heat transfer member, heat may be easily transferred to the base plate 220 including a cooling passage, and thus heat dissipation of the battery pack can be effectively performed.

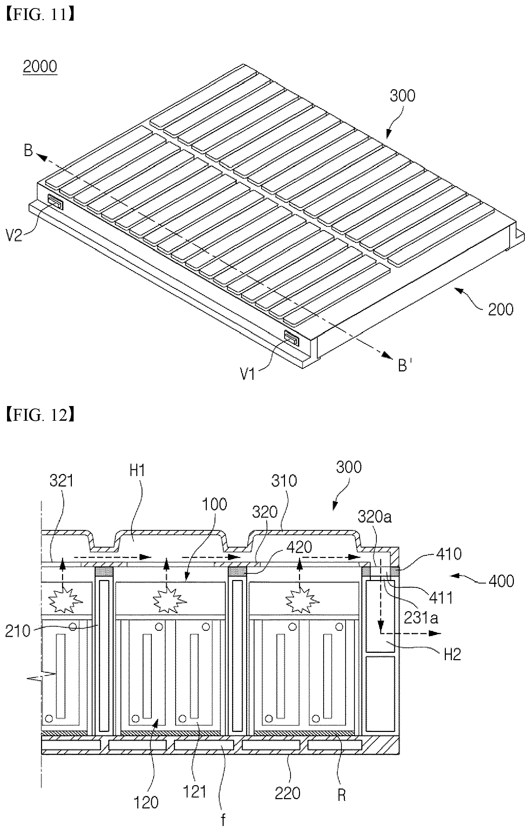

In addition, the lower pack housing 200 may have a cooling passage f embedded in the bottom portion that is in direct contact with the battery assembly. That is, the base plate 220 may have the cooling passage f therein (see FIG. 12). For example, when the base plate 220 is extrusion-molded, a space may be formed inside the base plate 220 according to a direction in which an extruded member moves. Such an internal space may be divided into a plurality of hollow channels by partition walls. A separate cooling passage may be installed in at least one of the hollow channels, or the hollow channel itself may be used as a cooling passage.

Therefore, in the present invention, a cooling fluid may be allowed to flow through the cooling passage f extending along the base plate 220, thereby effectively cooling the battery assembly. In addition, since the base plate 220 is formed in an integrated cooling structure, unlike the related art, there is no need to install a separate cooling plate on the base plate 220. As a result, the height of the battery pack can be reduced to make the battery pack more compact.

In addition, the front frame 231 and the rear frame 232 may each include a cooling passage communicating with the cooling passage of the base plate. In this case, one of the front frame 231 and the rear frame 232 may include a refrigerant inlet and a refrigerant outlet, which communicate with the cooling passage. Alternatively, a refrigerant inlet may be formed in one of the front frame and the rear frame, and a refrigerant outlet may be formed in the other. Thus, in the battery pack of the present invention, a cooling path formed by the cooling passage of the front frame 231, the cooling passage of the base plate 220, and the cooling passage of the rear frame 232 can be designed in various ways.

In addition, a plurality of partition walls, which are disposed between the battery assemblies, may be installed on the bottom portion of the lower pack housing 200. Referring to FIG. 4, a plurality of partition walls 210 are installed on the base plate 220, which is the bottom portion, and the sidewall frame 230 is coupled along a periphery of the base plate 220.

In the present embodiment, the partition wall 210 extends in the front-rear direction of the battery pack, but the present invention is not limited thereto. The partition wall 210 may extend in the left-right direction.

The battery assembly is disposed between the partition walls 210. That is, each partition wall 210 is disposed between adjacent battery assemblies. Accordingly, each battery assembly is separated and isolated in the left-right direction by the partition walls 210.

The partition wall 210 may be fastened to the base plate 220 using a fastening member or may be coupled to the base plate 220 through welding or the like. The partition wall 210 may be made of a metal material such as aluminum to sufficiently support a side surface of the battery assembly. In this case, the weight of the partition wall 210 can be reduced by manufacturing the partition wall 210 in a hollow structure through extrusion processing or the like. The material of the partition wall 210 is not limited to a metal material, and as long as rigidity can be secured, the partition wall 210 may be made of a synthetic resin material. However, considering a situation in which high-temperature gas or thermal runaway occurs due to ignition of the battery cell 110, it may be preferable that the partition wall 210 be made of a metal material such as aluminum, steel, or stainless steel in terms of heat resistance.

The height of the partition wall 210 is formed to be greater than or at least equal to the height of the battery assembly to isolate adjacent battery assemblies.

The battery assembly may be accommodated in the lower pack housing 200 while being in close contact with a side surface of the partition wall 210. To this end, a distance between adjacent partition walls 210 may be formed to be less than a width of each battery assembly. In this case, in order to accommodate each battery assembly between the partition walls 210, the battery assembly should be compressed in a width direction (battery cell stacking direction) and inserted between adjacent partition walls 210. In particular, when the cell stack unit 100 is used as a battery assembly, it is preferable that the distance between the partition walls be formed to be less than a width of the cell stack unit 100. The cell stack unit 100 may include a buffer pad 130 for absorbing the expansion of the battery cell 110 due to a swelling phenomenon. Therefore, when the cell stack unit 100 is compressed in the width direction, the buffer pad may be compressed to easily compress the cell stack unit 100.

On the other hand, when the battery module 10 is used as a battery assembly, there may be the following problems.

First, in order to constitute a battery module, a module housing, an end plate, and various other auxiliary parts are required, which increases manufacturing costs.

In addition, in order to install the battery module 10 between the partition walls 22 of the pack housing as shown in(a) of FIG. 3, an assembly tolerance G inevitably occurs. Therefore, the number of battery cells installed in the battery pack may be decreased as much as the assembly tolerance and the housing thickness of the battery module, which may reduce the energy density of the battery pack.

In addition, when the module housing 12 is installed on the battery cell 11 and the base plate 23 of the pack housing as shown in (b) of FIG. 3, for heat transfer efficiency, two layers of heat transfer members 1 and 1' installed above and below the module housing are required. In addition, due to the cooling plate 24 and the module housing 12, the battery pack space in the height direction increases, and a pack weight increases. For this reason, manufacturing costs increase, and also, energy density further decreases due to the increased weight of the battery pack and an expansion of an installation space.

However, when the cell stack unit 100 is used as a battery assembly, the above-described problems can be solved.

That is, when a cell stack unit is applied, since the cell stack unit has a so-called cell-to-pack structure in which battery cells are directly accommodated in a pack housing without a module housing, processes and costs associated with production and assembly of module parts can be eliminated..

In particular, since an assembly tolerance required for module installation can be eliminated, a space within a pack in the height direction can be made more compact and the weight of a battery pack can be reduced, an energy density occupying the same battery pack space can be further improved.

As such, according to the present invention, when the battery cell 110 is accommodated in the battery pack, the assembly tolerance G required for using the conventional battery module is no need. In addition, as described above, the cell stack unit 100 may be compressed and inserted between the opposite partition walls. Accordingly, since battery pack space can be saved in the left-right direction, more battery cells 110 can be installed in the same space, thereby improving energy density.

The arrangement form of the plurality of battery assemblies accommodated in the lower pack housing 200 is determined according to the arrangement form of the partition walls 210. In the present embodiment, the partition walls 210 are arranged to be elongated in the front-rear direction (X direction), and the battery assembly is arranged between the partition walls 210 to be elongated in a longitudinal direction. In addition, the partition walls 210 are arranged side by side in columns in the left-right direction (Y direction) of the battery pack, and accordingly, the battery assemblies are also arranged between adjacent partition walls 210 in columns in the left-right direction.

In order to increase the capacity of the battery pack, the battery assemblies may be arranged in two or more columns between adjacent partition walls 210 in an extending direction of the partition wall 210. In the present embodiment, the battery assemblies are arranged in two columns in the extending direction (front-rear direction) of the partition wall 210, but the present invention is not limited thereto. The battery assemblies may be arranged in three or four or more columns. In theory, although there is no limitation on the number of columns of battery assemblies in the front-rear direction, the number of required battery assemblies may be limited according to an installation space of a vehicle and the capacity of a battery pack.

In addition, two or more partition walls 210 may also be installed to be spaced a predetermined interval apart from each other in an arrangement direction of the battery assemblies to correspond to the number of columns of battery assemblies 100.

The partition walls 210 are spaced a predetermined interval apart from each other in the front-rear direction. First, this is to separate the battery assemblies into front and rear columns to prevent them from interfering with each other. Second, this is to install a reinforcement member capable of reinforcing the structural rigidity of the battery pack in the interval between the spaced partition walls 210. In the present embodiment, a center frame 250 as a reinforcing member is installed to extend in a direction perpendicular to the arrangement direction of the battery assembly. Specifically, the center frame 250 is installed in the interval between the partition walls 210.

As described above, according to embodiments, since the battery pack has a cell-to-pack structure in which the battery assemblies (cell stack units 100) are closely and directly installed between the partition walls 210 of the lower pack housing 200, the disadvantages of installing a battery module in a battery pack can be overcome. In addition, since high-temperature gas in the battery pack can be quickly discharged to the outside through the gas channels of the upper pack housing 300 and the lower pack housing 200, it is possible to delay the spread of high-temperature gases or flames in the battery pack to adjacent battery assemblies. Accordingly, the safety of the battery pack is greatly improved.

Meanwhile, an electrical component assembly (not shown) may be accommodated in some spaces of the battery pack instead of a battery assembly. The electrical component assembly may accommodate a relay device, a current sensor, a fuse, a battery management system (BMS), and a manual service disconnector (MSD), and the like. The electrical component assembly may be packaged in the battery pack together with the battery assemblies so as not to be exposed to the outside.

### (Second Embodiment)

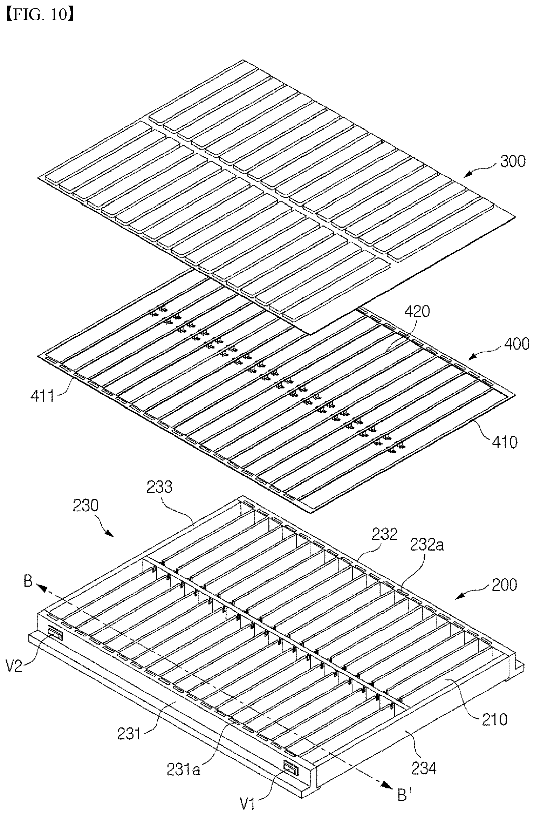

FIG. 10 is a partially exploded perspective view of a battery pack according to another embodiment of the present invention. FIG. 11 is a perspective view of a battery assembly of FIG. 10 according to the present invention. FIG. 12 is a cross-sectional view illustrating a gas venting path in the battery pack of FIG. 10.

A battery pack 2000 of the present embodiment further includes a gasket 400 coupled on upper surfaces of sidewall frames 230 of a lower pack housing 200 and partition walls 210 to isolate each battery assembly accommodated in the lower pack housing 200 together with the partition wall 210.

Since other components excluding the gasket 400 are identical to those of the first embodiment, detailed description of the same components as those of the first embodiment will be omitted.

In the present embodiment, the gasket 400 is installed between an upper pack housing 300 and the lower pack housing 200.

As shown in FIG. 10, the gasket 400 may include an outer frame 410 and a plurality of isolation frames 420 extending side by side inside the outer frame 410.

The outer frame 410 forms a peripheral portion of the gasket 400 and is a portion that is coupled to the upper surface of the sidewall frame 230 of the lower pack housing 200 when the gasket 400 is coupled to the lower pack housing 200. That is, the outer frame 410 is coupled to the upper surfaces of the sidewall frames (front and rear frames 231 and 232 and first and second side frames 233 and 234) of the lower pack housing 200. The outer frame 410 may be coupled to the upper surfaces of the sidewall frames, and the upper pack housing 300 may be coupled to an upper portion of the gasket 400 so that a peripheral portion of the battery pack can be sealed airtight. However, when the outer frame 410 covers all of the upper surfaces of the sidewall frames, the communication between a second gas channel H2 of the lower pack housing 200 and a first gas channel H1 of the upper pack housing 300 may be blocked. Therefore, as shown in FIGS. 10 and 12, through-passages 411 may be disposed in portions of the outer frame 410 of the gasket 400. That is, the through-passages 411 communicating with first and second venting holes may be disposed in coupling portions of the outer frame facing the first venting hole 320a and the second venting hole 231a. That is, the through-passage 411 communicating with the first and second venting holes may be disposed in a coupling portion of the outer frame facing the first venting hole 320a and the second venting hole 231a. Accordingly, the sealing by the gasket 400 can be achieved without interrupting gas flow.

Due to such a configuration, the sealing of the battery pack by the outer frame 410 and the venting of gas by the first and second gas channels can be easily achieved.

The isolation frame 420 is for isolating each battery assembly (for example, a cell stack unit 100) accommodated between the partition walls 210. For example, even when the upper pack housing 300 is coupled on the lower pack housing 200, the plurality of battery assemblies are not completely airtight and sealed from each other and are in a state in which air can flow therebetween. A space is formed between the upper pack housing 300 and the partition wall 210 to secure an installation space for mechanical parts installed on an inner surface of the upper pack housing 300 or allow cables necessary for electrical connection to be disposed. In addition, a predetermined volume of free space is provided such that gas generated in the battery cell 110 may be discharged. For this reason, each battery assembly is laterally isolated by the partition wall 210 and is in a state in which venting gas may flow through a space above the battery assembly. Accordingly, when ignition occurs in a specific battery cell 110 and high-temperature venting gas or flames are generated, the gas or flames may spread beyond the adjacent partition wall 210 to other adjacent battery assemblies. The isolation frame 420 is for delaying or preventing the spread of the high-temperature venting gases or flames. The isolation frame 420 is intended to prevent this spread. The isolation frames 420 are installed to extend parallel to the partition walls 210 inside the outer frame. Therefore, when the gasket 400 is coupled to the upper surface of the lower pack housing 200, the isolation frames may be coupled to upper surfaces of the partition walls 210 to completely isolate adjacent battery assemblies together with the partition walls 210. However, since a space is formed between the isolation frames, the battery assembly cannot be completely sealed using the gasket 400 alone. For complete sealing, it is necessary to install the upper pack housing 300 on the gasket 400.

Referring to FIG. 12, the battery assemblies (for example, cell stack units 100) are isolated from each other in the lower pack housing 200 by the partition walls 210. In addition, it can be seen that the outer frame 410 of the gasket 400 is coupled to the upper surface of the sidewall frame 231 of the lower pack housing 200, and each isolation frame 420 is also coupled to the upper surface of the partition wall 210 so that each battery assembly is reliably isolated in a height direction. In addition, the upper pack housing 300 covers the gasket 400 and is coupled to the lower pack housing 200, thereby sealing each battery assembly.

Adjacent battery assemblies are blocked (sealed) by the partition wall 210, the isolation frame 420, and the upper pack housing 300, thereby preventing high-temperature venting gas or flames from spreading between the battery assemblies. As such, according to the present invention, the sealing of the battery pack can be achieved by installing the gasket 400, which isolates the battery assemblies together with the partition wall 210, between the upper pack housing and the lower pack housing 200.

Meanwhile, a gas inlet 321 of the upper pack housing 300 may be disposed in each portion of a lower surface of the upper pack housing 300, which is positioned above each isolated battery assembly. That is, as shown in FIG. 12, when the gas inlet 321 is disposed in each portion of the lower surface of the upper pack housing 300, which is positioned above and faces each battery assembly, gas generated in each battery assembly is discharged upward toward the gas inlet 321. However, as described above, since each battery assembly is blocked in the left-right direction by the partition wall 210 and the gasket 400, the gas cannot flow into a space in which an adjacent battery assembly is accommodated. Therefore, even when ignition occurs in one battery assembly and gas is generated, the gas can be prevented from spreading to adjacent battery assemblies. In addition, gas can be quickly discharged upward from the ignited battery assembly. The gas passes through each gas inlet 321 to be quickly discharged to the outside through the first gas channel H1 of the upper pack housing 300 and a second gas channel H2 of the sidewall frame communicating therewith. The gas inlet 321 may be disposed in each portion of the lower surface of the upper pack housing 300 facing an upper surface of the corresponding battery assembly to correspond to each battery assembly. That is, a dedicated gas inlet 321 may be disposed for each battery assembly. However, the present invention is not limited thereto, and for example, when a plurality of columns of units 100 are disposed in an extending direction of the partition wall 210, one gas inlet 321 corresponding to the plurality of columns may be disposed. For example, in the present embodiment, at least one gas inlet 321 may be disposed per accommodation space of the battery assemblies (battery module 10 or cell stack unit 100) isolated by the partition wall 210.

As described above, according to the present embodiment, by providing the gasket 400 and the first and second gas channels, gas can be more effectively prevented from spreading to adjacent battery assemblies, and also high-temperature gas can be quickly discharged to the outside of the battery pack.

### (Third Embodiment)

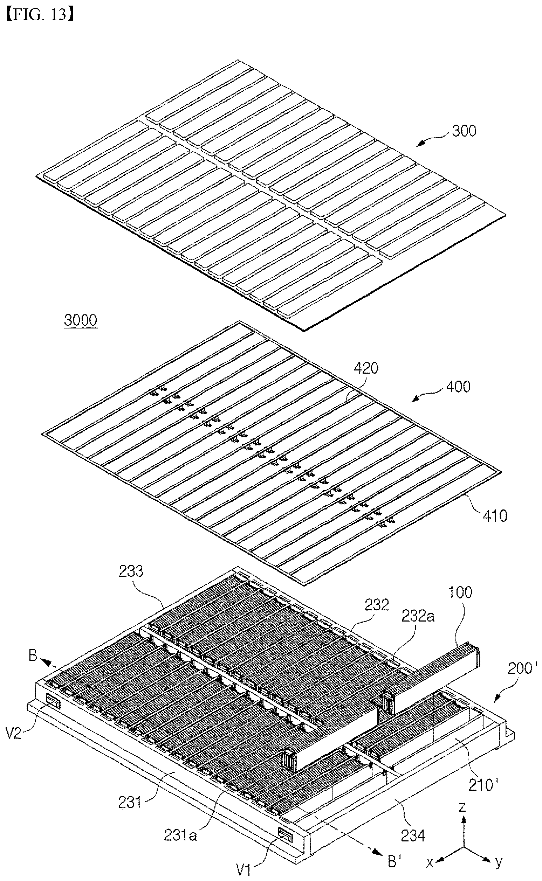

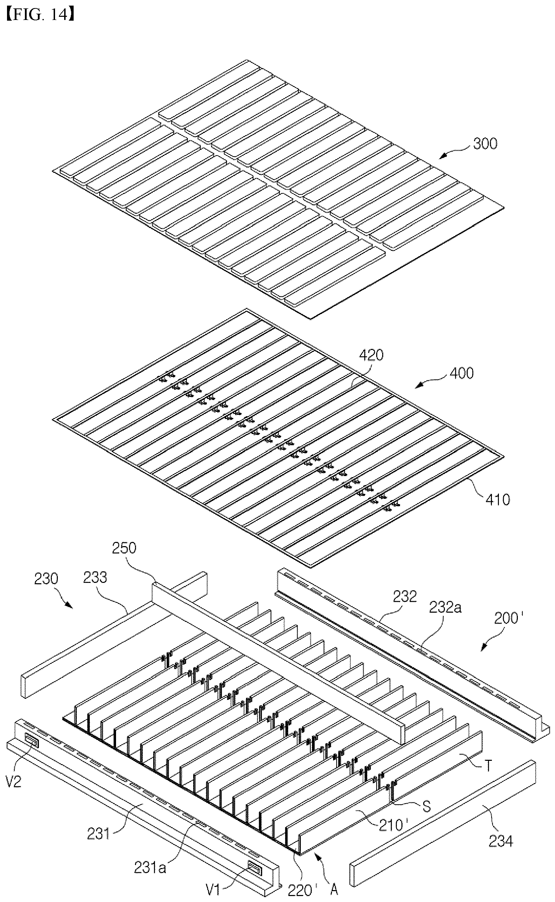

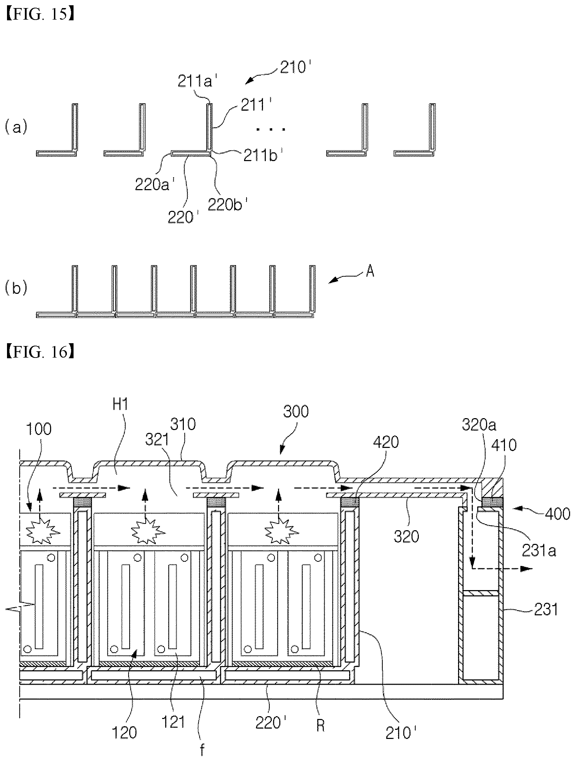

FIG. 13 is a partially exploded perspective view illustrating a battery pack according to still another embodiment of the present invention. FIG. 14 is an exploded view of a pack housing of the battery pack of FIG. 13. FIG. 15 is a schematic view illustrating a process of coupling a unit frame assembly which is a component of the battery pack of FIG. 13. FIG. 16 is a cross-sectional view illustrating a gas venting path in the battery pack of FIG. 13.

A battery pack 3000 of the present embodiment is different from that of the above-described embodiment in the configuration of a lower pack housing 200'. In the present embodiment, the lower pack housing 200' may include a unit frame assembly A and sidewall frames 230 coupled along a perimeter of the unit frame assembly A.

In the present embodiment, a plurality of unit frames T supporting lower surfaces and one side surface of battery assemblies (for example, a cell stack unit 100) may be provided, and the unit frames T may be consecutively coupled like Lego blocks to increase or decrease a bottom area of the battery pack as needed. That is, the unit frame assembly A may perform the functions of the base plate 220 and the partition wall 210 of the first and second embodiments.

Referring to FIGS. 14 and 15, the unit frame T includes a partition wall 210' extending in a height direction, and a base plate 220' extending from a lower end portion of the partition wall 210' in one direction (one of left and right directions). The base plates of the unit frames T are sequentially coupled in a line in one direction to form the unit frame assembly A. That is, an end portion 220b' of the base plate 220' at the lower end portion of the partition wall 210' in one unit frame T is coupled to an end portion 220a' of the base plate extending in one direction in a subsequent unit frame to sequentially couple the unit frames T in a line in a lateral direction (left-right direction), thereby forming the unit frame assembly A. The base plate 220' supports a lower surface of each battery assembly. Accordingly, the coupled base plates form the base plate 220' as in a conventional battery pack. When the number of coupled unit frames T is increased or decreased, the unit frame assembly A may become larger or smaller in a lateral direction. That is, a bottom area of the battery pack constituted by the base plates may be changed as needed.

In addition, the partition wall 210' of the unit frame T performs the same function as the partition wall 210 of the first and second embodiments. That is, as shown in FIG. 15, the unit frames T are sequentially coupled in the lateral direction so that the partition walls 210' of adjacent unit frames T are disposed opposite to each other. Each battery assembly 100 may be disposed in a space between the opposite partition walls 210'. Accordingly, the unit frames T may be sequentially coupled in the lateral direction, thereby increasing the area of a bottom portion on which the battery assembly 100 is disposed and naturally increasing the number of partition walls for separating the battery assemblies. However, the partition wall 210' of the rearmost unit frame T of the unit frame assembly may serve as a side frame at one side of the battery pack without separating adjacent battery assemblies.

In this way, like Lego blocks, as the number of coupled unit frames T is changed to couple the unit frames in the lateral direction, the size of the battery pack can be adjusted to satisfy various requirements. Accordingly, the electric capacity of the battery pack can also be freely adjusted to satisfy the required performance. Therefore, according to the present embodiment, the degree of freedom in design of the battery pack can be greatly increased.

Referring to FIG. 13, each of the battery assemblies in which battery cells are stacked has a predetermined width in a cell stacking direction (parallel to the left-right direction) and is elongated in a longitudinal direction (parallel to a front-rear direction) to have a predetermined length. Each of the battery assemblies is accommodated in the space between adjacent partition walls 210' of the unit frame assembly A. In this case, a lower surface of each battery assembly is supported on the base plate of each unit frame T, and both side surfaces of the battery assembly in a width direction are supported on the opposite partition walls 210' of adj acent unit frames T.

Meanwhile, the unit frame T extends to a predetermined length in the front-rear direction. That is, the partition wall 210' and the base plate extend in the front-rear direction. Lengths of the partition wall 210' and the base plate in the front-rear direction are determined to sufficiently accommodate a length of the cell stack unit 10 (that is, the base assembly) in the front-rear direction. That is, the length of the unit frame T in the front-rear direction is determined according to a length of the battery cell 110 constituting the cell stack unit.

The partition wall 210' and the base plate 220' may be manufactured by being integrally molded. Alternatively, two flat plates may be vertically disposed such that one ends are in contact with each other, and the ends of the flat plates in contact with each other may be welded and coupled to manufacture the unit frame T.

A metal material such as aluminum may be extruded such that an internal empty space is formed therein, thereby manufacturing the unit frame T as a hollow frame. In this way, the unit frames T are formed in a hollow form, thereby reducing the weight of the battery pack and increasing energy efficiency. A hollow space formed in the unit frame T can also be used as a passage through which a cooling fluid passes or a venting channel through which a venting gas generated in the battery pack is vented

The unit frames T may be coupled to each other, for example, through welding, such as friction stir welding. In this case, a stepped portion with a shape, which matches a shape of a front end portion of the base plate 220' of a subsequent unit frame T, may be formed at the end portion of the base plate at the lower end portion of the partition wall 210' in the unit frame T. That is, as shown in FIG. 15, the stepped portion is provided at the end portion 220b' of the base plate at the lower end portion of the partition wall 210' (or the lower end portion of the partition wall 210' connected to the end portion of the base plate). The shape of the stepped portion is formed to engage with a shape of the front end portion of the base plate of the subsequent unit frame. Therefore, adjacent base plates in the lateral direction are coupled to engage with each other at the stepped portion, thereby increasing the coupling strength of the unit frame T. In addition, since coupling surfaces of the stepped portion and the base plate can support the load of the partition wall 210' of the unit frame T and the battery assembly in the height direction, the load of the battery assembly can be appropriately distributed.

Referring to FIG. 13 again, the battery assemblies are arranged in two columns in an extending direction of the partition walls 210' between opposite partition walls 210'. In order to accommodate two columns of battery assemblies, the unit frame T is also elongated in the front-rear direction.

That is, each unit frame T includes two or more partition walls 210' spaced a predetermined interval S apart from each other in the front-rear direction and positioned in a line, and one base 220', which extends in one direction from a lower end portion of each partition 210' and is elongated in the front-rear direction. The partition walls 210' are formed in a line along the base plate 220' in the front-rear direction to support the battery assemblies in each column

The battery assemblies may be disposed in three or more columns in the front-rear direction, and the partition walls 210' of the unit frame T may be provided in three or more columns in the front-rear direction to correspond to the battery assemblies.

As shown in FIG. 14, when the unit frames T are assembled to constitute the unit frame assembly A, one side surface of the unit frames arranged at the front, rear, and sides of the unit frame assembly A is open. The sidewall frames 230 are coupled along a perimeter of the unit frame assembly A to constitute the lower pack housing 200'.

The sidewall frames 230 include a front frame 231 coupled to a front end of the unit frame assembly A in the front-rear direction, a rear frame 232 coupled to a rear end thereof in the front-rear direction, and first and second side frames 233 and 234 coupled to the unit frame assembly in the left-right direction.

The front frame 231 may include a front cover extending in the height direction, and a front plate protruding forward from a lower portion of the front cover.

The rear frame 232 may also include a front cover extending in the height direction, and a front plate protruding rearward from a lower portion of the front cover.

A height of each of the front cover and the rear cover may be equal to a height of the partition wall 210 of the unit frame.

In addition to the unit frame, the first and second side frames, the front frame 231, and the rear frame 232 may also be manufactured as hollow frames in which a space is formed. Therefore, the weight of the battery pack can be further reduced.

Even in the present embodiment, the same gasket 400 as in the second embodiment may be provided. The gasket 400 is coupled on an upper surface of the sidewall frame 230 of the lower pack housing 200' and the partition wall 210' of the unit frame assembly A. Specifically, an outer frame 410 of the gasket 400 is coupled on an upper surface of the front frame 231, an upper surface of the rear frame 232, and upper surfaces of the first and second side frames 233 and 234, wherein the front frame 231, the rear frame 232, and the first and second side frames 233 and 234 constitute the lower pack housing 200'. In addition, an isolation frame 420 of the gasket 400 may be coupled on the partition wall 210' of the unit frame assembly A.

When the gasket 400 and the lower pack housing 200 are coupled, adjacent battery assemblies are completely isolated in the left-right direction due to the partition wall 210' and the isolation frame 420.

Thereafter, an upper pack housing 300 may be coupled to an open upper surface of the lower pack housing 200' through the gasket 400 so that the battery assemblies can be individually sealed.

In this case, when a gas inlet 321 communicating with a first gas channel H1 is disposed in a lower surface of the upper pack housing 300 facing each isolated battery assembly, gas can be prevented from spreading to adjacent battery assemblies and gas generated from each unit 100 can be quickly discharged upward. The gas is discharged to the outside through the first gas channel H1 and a second gas channel H2.

Therefore, according to the present embodiment, the battery pack can be designed to be scalable by constructing the lower pack housing 200' using the unit frame. In addition, by coupling the gasket 400 on the unit frame assembly A, each battery assembly is sealed, thereby preventing high-temperature gases and flames from spreading to adjacent battery assemblies. In addition, high-temperature gas can be quickly discharged to the outside through the gas inlet 321 and gas channels communicating with each battery assembly.

Referring to FIG. 16, a width of the outer frame 410 is formed to be less than a width of a lower surface of the sidewall frame of the upper pack housing 300, and a first venting hole 320a is disposed in the lower surface of the sidewall frame not covered by the outer frame. In addition, an upper surface of the outer frame does not cover a second venting hole 231a disposed in an upper surface of an edge of the lower pack housing 200'. Accordingly, the first and second venting holes 320a and 231a of the upper pack housing 300 and the lower pack housing 200' may communicate with each other so that gas can be discharged to the outside through the sidewall frame. In this case, since the width of the outer frame 410 is made small so as not to completely block a space between the upper pack housing 300 and the lower pack housing 200', there is no need to form a through-passage 411 in the outer frame as shown in FIG. 12.

The description above is merely illustrating the technical spirit of the present invention, and various changes and modifications may be made by those skilled in the art without departing from the essential characteristics of the present invention. Therefore, the drawings disclosed in the present invention do not limit but describe the technical idea of the present invention, and the scope of the technical idea of the present invention is not limited by the drawings. The scope of protection of the present invention shall be interpreted on the basis of the accompanying claims, and it should be interpreted that all of the technical ideas included within the scope equivalent to the claims belong to the scope of the present invention.

## Claims

1. A battery pack comprising:
a plurality of battery assemblies;
a lower pack housing that has an open upper surface and accommodates the plurality of battery assemblies; and
an upper pack housing coupled to the open upper surface of the lower pack housing,
wherein the upper pack housing includes a gas inlet through which gas generated in the battery pack is introduced and a first gas channel communicating with the gas inlet, and
the lower pack housing includes a sidewall frame that includes a second gas channel communicating with the first gas channel and a gas outlet communicating with the second gas channel to discharge the gas to an outside of the battery pack.

2. The battery pack of claim 1, wherein an edge of the upper pack housing is coupled on the sidewall frame of the lower pack housing,
a first venting hole communicating with the first gas channel is disposed in a lower portion of the edge, and
a second venting hole, which communicates with the first venting hole and the second gas channel, is disposed in an upper portion of the sidewall frame.

3. The battery pack of claim 1, wherein the upper pack housing includes a lower plate frame in which the gas inlet is disposed, and an upper plate frame coupled on the lower plate fame to form the first gas channel between the upper plate frame and the lower plate frame.

4. The battery pack according to claim 1, wherein the upper pack housing has a hollow structure having the first gas channel disposed therein, and
a plurality of gas inlets communicating with the first gas channel are disposed in a lower surface of the upper pack housing.

5. The battery pack of claim 1, wherein the sidewall frame has a hollow structure in which the second gas channel is disposed, and
the gas outlet is disposed as at least one gas outlet along an outer wall of the sidewall frame.

6. The battery pack of claim 1, wherein the first gas channel and the second gas channel are oriented in different directions.

7. The battery pack of claim 1, wherein a venting mechanism part including a gas seal member, which is deformed at a predetermined pressure and/or temperature or higher to open the gas outlet to the outside, is installed at the gas outlet of the sidewall frame.

8. The battery pack of claim 1, wherein the upper pack housing and the sidewall frame are made of different materials, and
the material of the upper pack housing has higher thermal resistance than the material of the sidewall frame.

9. The battery pack of claim 1, wherein a plurality of partition walls each disposed between adjacent battery assemblies are installed on a bottom portion of the lower pack housing, and
the sidewall frame is coupled along a perimeter of the bottom portion.

10. The battery pack of claim 9, wherein a height of the partition wall is greater than or equal to a height of the battery assembly.

11. The battery pack of claim 9, wherein a distance between adjacent partition walls is less than a width of each of the battery assemblies.

12. The battery pack of claim 9, wherein the battery assemblies are arranged in two or more columns between adjacent partition walls in an extending direction of the partition wall,
two or more partition walls are installed to be spaced a predetermined interval apart from each other in an arrangement direction of the battery assemblies to correspond to the number of columns of the battery assemblies, and
the battery pack further includes a center frame which extends in a direction perpendicular to the arrangement direction of the battery assemblies and is installed in the predetermined interval between the partition walls.

13. The battery pack of claim 9, further comprising a gasket coupled on an upper surface of the sidewall frame of the lower pack housing and the partition wall to isolate each battery assembly accommodated in the lower pack housing together with the partition wall.

14. The battery pack of claim 13, wherein the gas inlet is disposed in each portion of a lower surface of the upper pack housing which is positioned above each isolated battery assembly.

15. The battery pack of claim 9, wherein the pack housing includes a unit frame assembly which is an assembly of a plurality of unit frames each including the partition wall and a base plate extending in one direction from a lower end portion of the partition wall, wherein an end portion of the base plate at the lower end portion of the partition wall in one unit frame is coupled to an end portion of the base plate extending in the one direction in a subsequent unit frame to sequentially couple the unit frames in a line in a lateral direction and form the unit frame assembly, and the sidewall frame coupled along a perimeter of the unit frame assembly.
